# EUROPÄISCHE PATENTSCHRIFT

(11) **EP 0 613 622 B1**
(45) Veröffentlichungstag und Bekanntmachung des Hinweises auf die Patenterteilung: **23.12.1998**
(21) Anmeldenummer: 94102296.4
(22) Anmeldetag: 16.02.1994
(51) Int. Cl.: A23L 2/02, A23B 7/00

(54) **Nichtalkoholisches Getränk mit vermindertem Gehalt an sensorisch Fehltöne verursachenden Verbindungen und hierdurch verbesserter Lagerstabilität**
Non-alcoholic beverage with reduced content of compounds causing off-flavor and therefore with improved storage stability
Boisson sans alcool, avec une teneur réduite en composés responsables de la dégradation de la saveur et avec, de ce fait, stabilité de stockage améliorée

(30) Priorität: 20.02.1993 DE 4305345
(43) Veröffentlichungstag der Anmeldung: 07.09.1994
(73) Patentinhaber: ECKES AG, D-55268 Nieder-Olm (DE)
(72) Erfinder: Wiesenberger, Alfred, D-65191 Wiesbaden (DE); Kolb, Erich, Dr., D-55268 Nieder-Olm (DE); Haug, Martin, Dr., D-55288 Schornsheim (DE); Gürster, Dietmar, D-55268 Nieder-Olm (DE)
(74) Vertreter: Schubert, Siegmar, Dipl.-Ing.

(56) Entgegenhaltungen:
- EP-A- 0 198 591
- FR-A- 2 505 617

## Beschreibung

Die Erfindung betrifft ein Verfahren zur Herstellung nichtalkoho lischer Getränke mit den Merkmalen im Oberbegriff des Anspruchs sowie entsprechend diesen Merkmalen beschaffene nichtalkoholisch Getränke, die mit einem solchen Verfahren erhältlich sind. Dabei zeichnen sich die erhältlichen Getränke durch einen verminderten Gehalt an sensorische Fehltöne verursachenden Verbindungen aus. Die Getränke verfügen ferner hierdurch über eine verbesserte sensorische Stabilität bei der Lagerung bei Raumtemperatur (ca. +20°C), während ihre übrigen, ursprünglich originären und wertbestimmenden Bestandteile weitgehend unverändert bleiben. Aus der Literatur (Belitz,Grosch: Lehrbuch der Lebensmittelchemie) Springer Verlag 1992, S.197, 198, 307, 308, 318, 351, 351; Schobinger: Handbuch der Lebensmitteltechnologie, Frucht-u. Gemüsesäfte, Verlag Eugen Ulmer 1987, S. 348, 349, 386; Schormüller: Handbuch der Lebensmittelchemie, Bd. Obst, Gemüse, Kartoffeln, Pilze, Springer Verlag 1986, S. 205-207) ist bekannt, daß bei Herstellung und Lagerung von Getränken aus deren natürlichen Inhaltsstoffen Komponenten entstehen können, welche die sensorische Qualität dieser Produkte, u.a. abhängig von Lagerdauer, Lagertemperatur und Packmitteln, vermindern. Solche Komponenten werden in der Fachsprache unter dem Begriff "off-flavour Komponenten" zusammengefaßt, was im Deutschen am besten mit "Fehlton" bezeichnet wird.

Unter unerwünschten Komponenten im Sinne der vorliegenden Erfindung werden sowohl die eigentlichen geruchs- oder geschmacksaktiven Verbindungen (off-flavour) wie auch weiterhin deren sensorisch nicht aktive Vorstufen (auch Precursoren genannt) verstanden.

Für Getränke wird das Auftreten von Fehltönen besonders häufig bei alkoholischen Produkten wie Wein und Bier beschrieben. Da diese Getränke durch mikrobielle Prozesse gewonnen werden, kommt hier mikrobiell entstandenen Fehltönen die größte Bedeuzu. Auch spielen hier oxidative, durch Sauerstoff bedingte Veränderungen eine Rolle.

Bei nichtalkoholischen Getränken, bei denen zur Vermeidung mikrobiellen Verderbs in der Regel unmittelbar nach der Gewinnung eine Hitzeinaktivierung der Mikroorganismen und der nativen Enzyme vorgenommen wird, kommt insbesondere der Bildung von Fehltönen bei Lagerung bei höheren Temperaturen eine Bedeutung Zu. Oxidative Prozesse werden durch die Entfernung des Sauerstoffs bei Herstellung und Abfüllung der Getränke in der Regel erfolgreich vermieden. Es handelt sich bei den Vorgängen während der Lagerung demnach meist um hydrolytische Reaktionen (Spaltung von Molekülen durch Wasseraufnahme) und Kondensationsreaktionen (Polymerisation einfacher zu komplexen Molekülen) wobei als Bruchstücke, d.h. sozusagen nur als Nebenkomponenten, geruchs- und geschmacksaktive Verbindungen mit meist geringem Molekulargewicht entstehen.

Einige beispielhafte Bildungswege für Fehltöne bei der Lagerung von nichtalkoholischen Getränken sind in der folgenden Übersicht zusammengestellt:

| Vorstufen | Reaktion | Leitkomponente der Reaktion | Fehlton verursachende Verbindungen |
|---|---|---|---|
| Zucker Ascorbinsäure Aminosäuren | nicht enzymatische Bräunung (Maillard-Reaktion) (Kondensation) | Furfural, HMF*, | 2,5 Dimethyl-4-hydroxy-3-(-2H) furanon |
| Ferulasäure (Hydroxyzimtsäuren) | oxidative Decarboxylierung | PVG** | PVG** |
| Limonen Linalool | Hydoxylierung Oxidation | a-Terpineol Carvon, Carveol | Menthadienole |

| | | | |
|---|---|---|---|
| * HMF = Hydroxymethylfurfural, | | | |
| ** PVG = p-Vinylguajakol | | | |

Unter sensorischer Beeinträchtigung werden sowohl Beeinträchtigungen in Geruch wie in Geschmack und Farbe des Getränks verstanden.

Während sensorisch die Veränderungen mittels entsprechender Prüfverfahren erkannt werden können, sind die off-flavour Komponenten chemisch nur zum Teil, aber noch nicht in ihrer Gesamtheit charakterisiert. Bei ihrer Entfernung aus Getränken ging man früher vielfach einen empirischen Weg, indem man z.B. geeignete Kellerbehandlungsmittel anhand ihres sensorischen Effekts auswählte, wobei auf eventuelle Beeinträchtigungen der übrigen Merkmale des Getränkes wenig Rücksicht genommen wurde. Mit Entwicklung der analytischen Chemie orientierte man sich zunächst vor allem an einfach erfaßbaren Leitsubstanzen wie z.B. Hydroxymethylfurfural oder phenolischen Verbindungen. Erst mit der Entwicklung chromatographischer Methoden Ende der 60iger Jahre wurde die Beobachtung von einzelnen Verbindungen, verbunden mit einer Aufklärung der Reaktionsmechanismen, möglich. Diese neueren analytischen Methoden stellen die Grundlage für eine gezielte Entwicklung von Getränken mit verbesserter Lagerstabilität dar, die Inhalt dieser Erfindung sind. Nur durch Einsatz dieser Techniken kann die Entfernung Fehltöne verursachender Verbindungen selektiv, d.h. ohne Beeinträchtigung anderer Eigenschaften des Getränks vorgenommen werden.

Eine der wesentlichen Reaktionen die zu off-flavour Bildung in Säften führt, ist z.B. die Maillard-Reaktion. Eine weitere bekannte Reaktion ist die Entstehung von p-Vinylguajakol, ebenfalls eines off-flavour aus Ferulasäure, die z.B. in Citrussäften als Vorstufe anwesend ist. Die Gemeinsamkeit dieser Reaktionen ist, daß sie durch Hitzeeinwirkung, wie sie bei der üblichen Haltbarmachung von Getränken angewandt wird, beschleunigt werden. Weiterhin laufen sie auch bei Lagerung in Abhängigkeit von Lagertemperatur und Lagerdauer ab.

Unter Beibehaltung der konventionellen und zugleich sicheren thermischen Haltbarmachungsverfahren und der für abgefüllte fruchtsafthaltige Getränke üblichen Lagerungsgewohnheiten bei Raumtemperatur ist deshalb praktisch immer mit einer Zunahme der off-flavour-Komponenten zu rechnen, was gleichzeitig eine Qualitätsminderung der Produkte darstellt. Die Bildung von Fehltönen während der Lagerung bei Raumtemperatur wird in ihrem Umfang maßgeblich durch den Gehalt an pflanzlichem Rohmaterial, dem Extrakt/Säure Verhältnis und den pH-Wert des Getränks beeinflußt. Diese Qualitätsminderung, die über die chemischen Parameter und durch sensorische Prüfungen verfolgt werden kann, führt zu Getränken die durch einen erhöhten Gehalt an z.B. p-Vinylguajakol, Hydroxymethylfurfural und a-Terpineol gekennzeichnet sind. Im Vergleich zu frisch hergestellten oder bei niedrigen Temperaturen gelagerten Produkten führt dies zu einer deutlichen Beeinträchtigung der Sensorik, die auch als sogenannter "Lagerton" bezeichnet wird.

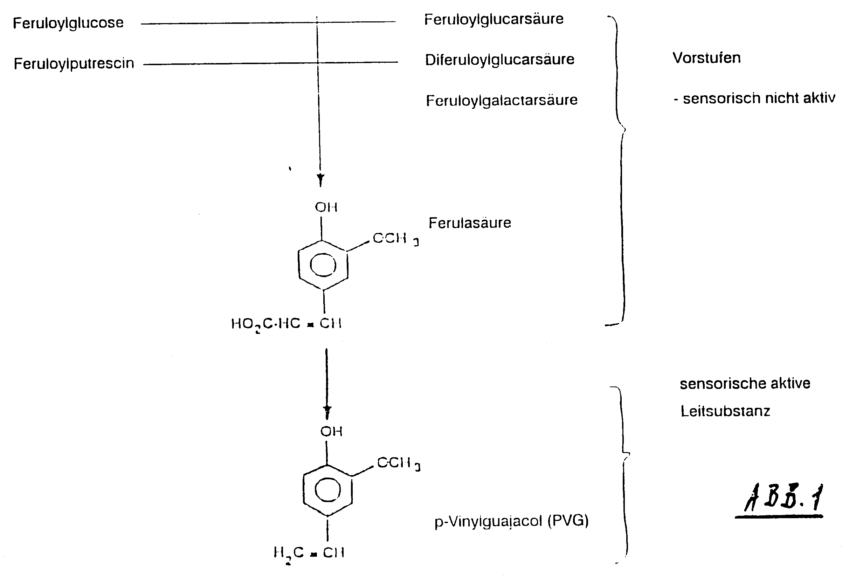

Die sensorisch inaktiven Vorstufen für die Bildung von sensorisch aktiven, negativen Verbindungen sind in allen pflanzlichen Materialien vorhanden. Es handelt sich hierbei z.B. um Hydroxyzimtsäuren. Unter freien Hydroxyzimtsäuren werden die in pflanzlichen Materialien ubiquitär vorkommenden Verbindungen Kaffee-, Ferula-, Cumar- und Sinapinsäure verstanden. Je nach Art der Pflanze trifft man die einzelnen Hydroxyzimtsäuren in unterschiedlichen Verhältnissen zueinander an. Der überwiegende Teil der Hydroxyzimtsäuren liegt im frischen pflanzlichen Material zum überwiegenden Teil esterartig gebunden vor. Während der Lagerung von Getränken auf pflanzlicher Basis, z.B. bei Raumtemperatur, werden durch hydrolytische Vorgänge zunächst die Säuren aus ihren Estern freigesetzt. Diese immer noch sensorisch inaktiven, Verbindungen werden dann zu einfachen phenolischen Verbindungen abgebaut. Unter einfachen phenolischen Verbindungen werden je nach zugrundeliegender Hydroxyzimtsäure das p-Vinylguajakol (PVG) (2-Methoxy-4-vinylphenol), das 2-Hydroxy-4-vinylphenol, das 4-Vinylphenol und das 1,2-Methoxy-4-vinylphenol verstanden. Diese einfachen Vinylphenole sind im Gegensatz zu den Hydroxyzimtsäuren sensorisch sehr aktiv und werden als Fehltöne in den gelagerten nichtalkoholischen Getränken erkannt. Der beispielhafte Weg der Reaktion im Falle der Ferulasäure kann Abbildung 1 entnommen werden.

Getränke, die dagegen bei den für diese Produkte üblichen Lagerbedingungen nach einer Lagerung von bis zu 12 Monaten bei 20°C verminderte Gehalte an Fehltöne verursachenden Verbindungen aufweisen, während ihre übrigen Inhaltsstoffe und wertbestimmenden Bestandteile weitgehend unverändert sind, wurden bisher noch nicht beschrieben.

Erst mit der Hochdruckflüssigkeitschromatographie (HPLC) konnten die kleinen Mengen an freien Hyroxyzimtsäuren in pflanzlichem Material mengenmäßig bestimmt werden, wodurch es überhaupt möglich wurde, ihre Rolle bei der off-flavour Bildung zu erkennen. In mehreren Arbeiten beschreiben Nagy und Rouseff die Rolle der Ferulasäure als Vorstufe für die Entstehung der "off-flavour"-Komponente p-Vinylguajakol in bei höheren Temperaturen gelagertem Orangensaft. Bestimmungsmethoden für gebundene, freie Ferulasäure und p-Vinylguajakol werden angegeben. In Abhängigkeit von Lagerdauer und Lagertemperatur fanden sie zunehmende Werte für freie Ferulasäure und p-Vinylguajakol wie sie auch die Erfinderin angibt. Auch wurde von diesen Autoren eine Verschlechterung der Sensorik bei entsprechender Lagerung beobachtet. Zusammenfassend sei betreffend der Ergebnisse von Nagy u. Rouseff auf die folgende Veröffentlichung verwiesen: Off-Flavours in Foods and Beverages, Developments in Food Science, G. Charalambous ed.; S.211-227, Off-Flavour Development in Citrus Juice Products; R.L. Rouseff, S. Nagy, M. Naim, U. Zahavi. Elsevier Science Publishers B.V. Amsterdam, 1992.

In dieser als nächstkommender Stand der Technik für die vorliegende Erfindung gewerteten Veröffentlichung wird jedoch nicht auf die Möglichkeit eingegangen, die Hydroxyzimtsäuren als Vorstufen für die Bildung sensorisch negativer einfacher Phenole zu entfernen. Es wird vor allem die Rolle der Ferulasäure als Vorstufe für die Entstehung der "off-flavour"-Komponente p-Vinylguajakol hervorgehoben. Hydroxyzimtsäuren werden daneben zwar erwähnt, es wird jedoch betont, daß diese nur in sehr geringen Mengen vorliegen und daß die wesentliche Zwischenstufe, welche für die Bildung der "off-flavour"-Komponente p-Vinylguajakol verantwortlich ist, die freie Ferulasäure ist. Es finden sich ferner in diesem Stand der Technik weder Hinweise auf eine mögliche Entfernung von Hydroxyzimtsäuren noch auf die Entfernung anderer Vorstufen von der "off-flavour"-Komponente p-Vinylguajakol. Es werden dagegen zwei andere Verfahren vorgeschlagen, um durch Erwärmung entstandene Fehltöne zu vermindern, wobei eines die Entfernung von Aminosäuren und ein anderes die Behandlung eines Getränkes unter bestimmten Temperaturbedingungen betrifft. Auch wird darauf hingewiesen, daß spezifische Verbindungen, welche die geschmacklichen Fehltöne verursachen, noch nicht identifiziert werden konnten. Ferner findet sich ein im Gegensatz zur oben dargelegten Hydroxyzimtsäurenentfernung stehender Hinweis auf einen möglichen Zusatz schwefelhaltiger Aminosäuren zur Vermeidung der Hydroxymethylfurfural- und p-Vinylguajakol-Bildung (J. Agric. Food Chem. 41 (1993) 1355-1361). US Patent 5,126 153 beschreibt Methoden, um Produkte zur Verminderung der Bräunung mit Cystein zu behandeln. US Patent 5,171 597 beschreibt die Verwendung von Glutamin und Glutathion um Getränke, insbesondere Bier, zu konservieren.

Versuche der Anmelderin haben jedoch ergeben, daß der zur Unterdrückung der Hydroxymethylfurfural- und p-Vinylguajakol-Bildung in der Literatur beschriebene Zusatz schwefelhaltiger Aminosäuren vielmehr bereits selbst zu Fehltönen im Saft führt, da diese Aminosäuren einen unangenehmen Schwefelwasserstoff-Nebenton aufweisen. Durch die in der vorliegenden Anmeldung vorgeschlagene Entfernung von Fehltönen in Kombination mit der Zugabe schwefelhaltiger Aminosäuren kann das Auftreten dieses Schwefelwasserstofftons hingegen beseitigt werden, wodurch überhaupt erst die Möglichkeit gegeben ist, sensorisch akzeptable Produkte zu erhalten. Versuche der Anmelderin haben weiterhin ergeben, daß dann auch bei nachfolgender Lagerung bei Raumtemperatur die Hydroxymethylfurfural-Bildung deutlich gehemmt werden kann.

Der alleinige Zusatz schwefelhaltiger Aminosäuren wie er in der Literatur beschrieben wird, ist zur Verbesserung der sensorischen Lagerstabilität auch deshalb nicht ausreichend, weil die Bildung von p-Vinylguajakol vergleichsweise gering beeinflußt wird, was nach entsprechender Lagerung zum erneuten Auftreten von Fehltönen führt. Die Zugabe von Kupferionen zur Verzögerung der p-Vinylguajakol-Bildung wie sie von Peleg et al (J. Agric. Food Chem. 40 (1992) 764-767) beschrieben wird, verbietet sich bei einem Getränk aufgrund der Toxizität des Kupfers und führt darüber hinaus gleichzeitig zu einer Beschleunigung der Hydroxymethylfurfural-Bildung. Aufgabe der vorliegenden Erfindung ist die Bereitstellung eines Verfahrens zur Herstellung nichtalkoholischer Getränke, ausgehend von den Merkmalen im Oberbegriff des Anspruchs 1, aus pflanzlichem Material, vorzugsweise fruchthaltigen Getränken, wobei die verfahrensgemäß erhältlichen Getränke bei einer Lagerung über einen Zeitraum von mindestens 12 Monaten ohne Qualitätsverlust gelagert werden können und während der Lagerung nicht den als sogenannten "Lagerton" bezeichneten Geruch und Geschmack entwickeln. Bisher kann dies nur dann erreicht werden, wenn die Produkte tiefgefroren, bei ca.-18°C, oder bei niedrigen Temperaturen, d.h. ca.+ 4°C aufbewahrt werden. In allen Fällen in denen eine Tiefkühl- oder eine Kühllagerung aus den unterschiedlichsten Gründen nicht realisiert werden kann und die Lagerung bei Raumtemperatur erfolgt, ist dies bisher immer mit einer Beeinträchtigung der sensorischen Qualität und damit einer Wertminderung verbunden.

Diese Aufgabe wird durch die kennzeichnenden Merkmale des Anspruchs 1 bzw. 4 gelöst. Vorteilhafte Weiterbildungen des Verfahrens bzw. dadurch erhältlichen Getränks sind in den Unteransprüchen definiert.

Erfindungsgemäß werden einfache phenolische Verbindungen als sensorisch bei der Lagerung Fehltöne verursachende Verbindungen während oder nach der Herstellung eines im Oberbegriff des Anspruchs 1 definierten Getränkes dadurch selektiv entfernt oder umgewandelt, daß Hydroxyzimtsäuren im Getränk als Vorstufen dieser Verbindungen selektiv wie beansprucht entfernt und/oder umgewandelt werden.

Überraschenderweise wurde festgestellt, daß ein weitgehender Qualitätserhalt während der Lagerung bei Raumtemperatur, d.h. Temperaturen von ca. +20°C, bereits dann erreicht wird, wenn durch die Entfernung der Hydroxyzimtsäuren nur eine der Reaktionen zur Bildung von Fehltönen bei der Lagerung beeinflußt wird und die übrigen Reaktionen weiterhin ablaufen. Die sensorische Stabilität über 12 Monate Lagerung bei Raumtemperatur wird überraschenderweise sogar bereits deutlich verbessert, wenn nur die reaktivsten Vorstufen für einfache Vinylphenole entfernt werden und keine vollständige Entfernung der Vorstufen erfolgt. Der Effekt der Maßnahmen zur Verminderung der p-Vinylguajakol-Bildung wird noch dadurch unterstrichen, daß auch ohne Verminderung der Hydroxymethylfurfural-Bildung bereits eine sensorisch verbesserte Lagerstabilität erreicht wird.

Bei gleichzeitiger Entfernung von Verbindungen aus der Maillard-Reaktion, für die das Hydroxymethylfurfural eine Leitsubstanz darstellt, wird der Effekt noch verbessert. Da es sich bei den Vorstufen der Maillard-Reaktion um wesentliche Wertmerkmale der Pflanzensäfte wie Zucker, Aminosäuren und Vitamin C handelt, die nicht aus dem Saft entfernt werden können, bildet sich bei der Lagerung des fertigen Getränks erneut Hydroxymethylfurfural nach, so daß die Lagerstabilität sich in diesem Fall dann verbessern läßt, wenn durch Zusätze in diese Reaktion eingegriffen und diese unterdrückt wird oder die entstehenden Verbindungen während der Lagerung ständig, z.B. über Adsorption, an die Verpackungsmaterialien entfernt werden.

Die Kombination der vorgenannten Maßnahmen, d.h. die teilweise oder vollständige Entfernung der Hydroxyzimtsäuren, die Unterdrückung der Maillard-Reaktion und der Zusatz schwefelhaltiger Aminosäuren führt zu Produkten, deren Geschmacksprofil bei der Lagerung über einen Zeitraum bis zu ca. 12 Monaten bei Raumtemperatur weitgehend erhalten bleibt, womit die bei derartigen Produkten üblicherweise bei der Lagerung auftretenden Veränderungen und die damit verbundene Qualitätsbeeinträchtigung vermieden werden können.

Eine vergleichbare Verbesserung der Lagerstabilität bei der Lagerung bei Raumtemperatur über einen Zeitraum von ca. 12 Monaten wurde bisher noch nicht beschrieben.

Die EP Anmeldung 0 198 591 beschreibt Citrussaftkonzentrate und Getränke mit frischerem Geschmack und größerer Lagerstabilität, was im wesentlichen durch einen niedrigen Anteil an Schalenöl und hohe Anteile an leichtflüchtigen Aromakomponenten, sogen. Wasserphase erreicht wird. Aus Orangensaftkonzentraten der beschriebenen Zusammensetzung wurden nach einer Lagerung von einem Monat bei -15°C bzw. 5 Wochen bei -23°C Getränke hergestellt, die im Vergleich zu Getränken aus Orangensaftkonzentraten mit höherem Ölgehalt, die unter gleichen Bedingungen gelagert waren, als frischer beurteilt wurden. Niedrigere Gehalte an sensorisch Fehltöne verursachenden Verbindungen und Maßnahmen zu deren Entfernung werden dagegen nicht beschrieben.

EP Anmeldung 0 292 046 beschreibt Orangensaftkonzentrate mit einem verminderten durch Kochen hervorgerufenen Fehlton. Diese Produkte sind gekennzeichnet durch ihren Extraktgehalt, ihre Viskosität, die Pektinesteraseaktivität und das zurückgehaltene Valencen. Auf das der vorliegenden Erfindung zugrundeliegende Ziel der Verbesserung der sensorischen Lagerstabilität durch Beeinflussung der Bildung von Fehltönen wird nicht eingegangen.

EP 0292 047 beschreibt ein Orangensaftprodukt mit einem mehr handgepreßten Charakter charakterisiert durch seinen Feststoffgehalt, seine Viskosität, seine Pektinesteraseaktivität, seinen Gehalt an titrierbarem Öl und die Zusammensetzung der Orangen-Aromastoffkomponente sowie das Verhältnis von erwünschten zu weniger erwünschten Aromakomponenten. EP 0 292 048 bescheibt ein Verfahren zur Herstellung eines kommerziellen Beschickungssaftes aus Orangenfrüchten mit einem mehr handgepreßten Charakter. Neben den erwünschten Aromakomponenten werden auch unerwünschte Aromakomponenten beschrieben, die sich aber nur auf die mit den dort beschriebenen gaschromatographischen Methoden erfaßbaren Komponenten beziehen. Weder in EP 0 292 047 noch in EP 0 292 048 wird auf die Entfernung der bei der Lagerung bei Raumtemperatur sich bildenden Fehltöne und die die Fehltöne verursachenden Verbindungen eingegangen, die auch im Rahmen der dort beschriebenen Analytik überhaupt nicht erfaßt wurden.

Bei der Herstellung der nichtalkoholischen Getränke mit vermindertem Gehalt an sensorisch Fehltöne verursachenden Verbindungen hat sich gezeigt, daß hierbei u. a. Verfahren Verwendung finden können, wie sie bei der Getränkeherstellung üblich sind. Dabei werden erfindungsgemäß die Verfahrensmerkmale so ausgewählt, daß eine hohe Selektivität gegenüber den Fehltönen verursachenden Verbindungen besteht, die übrigen Inhaltstoffe und sensorischen Merkmale der Getränke jedoch weitgehend erhalten bleiben.

Die WO 89/10703 beschreibt ein Verfahren zur selektiven Entvon nichtflüchtigen Stoffen, wie Zucker und/oder Säure und/oder Fehlgeschmack verursachenden Stoffen aus nichtalkoholischen und alkoholischen Getränken. Hierbei werden Membrantrennverfahren und weitere Verfahren angewandt. Auch Kombinationen mit Kellerbehandlungsverfahren, Ad- und Absorbentien oder enzymatische Verfahren oder Fermentationen werden genannt. Es wird in diesen Anmeldungen jedoch nicht auf die Erhaltung der übrigen sensorischen und analytischen Eigenschaften eingegangen, wozu eine Auswahl der Verfahren unter oben genannten Aspekten notwendig ist.

Aktivkohle wird bereits seit langem zur Entfärbung nachgedunkelter Säfte eingesetzt. Unlösliches Polyamid wird zur Entfernung von phenolischen Verbindungen (DE Patent 25 78 547) herangezogen. Insbesondere für die Wein- und Bierbereitung wurde eine Reihe von Arbeiten zur Entfernung von Fehltönen mittels dieser Adsorbentien veröffentlicht.

Polystyrolharze und Cyclodextrine werden zur Entbitterung von Citrussäften eingesetzt. U.S. Patent 4,514,427 beschreibt die Kombination von Entsäuerung und Entbitterung von Grapefruitsaft durch Austauscherharze in der basischen Form. U.S. Patent 4,439,458 beschreibt die Entbitterung von Citrussäften mit einem Polystyrol-Copolymer. Die EP Anmeldung 0 334 641 A2 beschreibt die Entbitterung von Citrussäften mit einem besonders geeigneten Adsorbens auf Styrol- und Divinylbenzol-Copolymer-Basis.

Die Extraktion mit überkritischem Kohlendioxid wurde bei der Entbitterung von Citrussäften versuchsweise eingesetzt.

Die US-A-4,975,289 beschreibt die Entfernung von off-flavour verursacht durch mittelkettige Aldehyde durch Verwendung von Essigbakterien. Andere Mikrorganismen werden nicht genannt. Die EP 0 328 322 A2 beschreibt die Entfernung von Fehltönen aus Sojamilch wobei Glucose, Glucoseoxidase und Katalase eingesetzt werden. Im Falle des hier vorliegenden erfindungsgemäßen Verfahrens mit selektiver Entfernung und/oder Umwandlung von Hydroxyzimtsäuren wird dagegen mit anderen Mikroorganismen oder Enzymen als den vorstehend genannten gearbeitet.

Die EP 0 162 527 A2 beschreibt ein Verfahren zur Herstellung eines Tee-Konzentrates, wobei durch geeignete Schritte off-flavour verursachende Verbindungen durch Ausdampfen entfernt werden. Hier wird der Tee-Extrakt vor der off-flavour Entfernung angesäuert. Ein Säurezusatz ist im vorliegenden erfindungsgemäßen Verfahren nicht vorgesehen und steht vielmehr einer selektiven off-flavour Entfernung entgegen.

Durch eine vergleichende Verkostung von mit geeigneten Maßnahmen behandelten Produkten und unbehandelten Produkten - jeweils frisch und nach Lagerung - kann gezeigt werden, daß die in der vorliegenden Erfindung beschriebenen Maßnahmen eine deutliche qualitative Verbesserung der Produkte ergeben. Darüber hinaus kann die Wirksamkeit der Maßnahmen auch analytisch, durch Messung der entsprechenden off-flavour-Komponenten und deren Vorstufen verfolgt werden. Eine derartige über die Sensorik hinausgehende gezielte Verfolgung der Wirksamkeit der Maßnahmen durch analytische Methoden ist erst in neuerer Zeit unter Zuhilfenahme der modernen instrumentellen Analytik wie Hochdruckflüssigkeitschromatographie (HPLC) und Hochauflösende Gaschromatographie (HRGC) möglich.

Durch die Kombination der oben genannten Methoden, der Sensorik und der Analytik ist es möglich, aus den in Frage kommenden Verfahren diejenigen auszuwählen, die eine gezielte selektive Entfernung der Fehltöne verursachenden Verbindungen ermöglichen und Produkte zu erhalten, die über eine deutlich verbesserte sensorische Lagerstabilität verfügen bei gleichzeitigem weitgehenden Erhalt ihrer übrigen Eigenschaften und Inhaltsstoffe.

Hierbei sind insbesondere Enzyme aber auch Mikroorganismen mit Eigenschaften zur selektiven Stoffumwandlung als günstig gefunden worden, da sie eine völlige Entfernung der Vorstufen für Fehltöne aus Hydroxyzimtsäuren erlauben.

Geeignete Kombinationen von Verfahren haben den Vorteil, daß auch trubstoffhaltige Produkte behandelt werden können. Hierzu können Kombinationen mehrerer Verfahrensschritte notwendig sein. So können z.B. Säfte durch Membranfiltration vor der Behandlung vom Trub befreit werden. Das Produkt wird dann behandelt und danach der Trub wieder zugegeben. Es ist auch möglich die Behandlung durch Adsorbentien mit trüben Produkten im Flüssigbettverfahren oder nach nur teilweiser Abtrennung der Pulpe durch Zentrifugation durchzuführen. Inbesondere bei der Verwendung von Enzymen kann allerdings, was besonders einfach zu handhaben ist, direkt im trüben Saft gearbeitet werden.

Durch die selektive Entfernung der Fehltöne verursachenden Verbindungen wird eine nachhaltige sensorische Verbesserung der Lagerstabilität erreicht, so daß auch nach einer Lagerung von 12 Monaten bei 20°C ein qualitativ hochwertiges und wohlschmeckendes Produkt vorliegt, das nicht den sonst bei derartigen Produkten üblichen "Lagerton" aufweist.

Im Falle des p-Vinylguajakols ist es möglich, die Bildung dieser off-flavour-Komponente durch vollständige oder teilweise Entfernung der Ferulasäure als Vorstufe zu unterdrücken. Im Falle des Hydroxymethylfurfurals können die Vorstufen, z.B. Kohlenhydrate, nicht aus dem Saft entfernt werden, ohne diesen völlig zu verändern. Um insbesondere die mit der Hydroxymethylfurfural-Bildung in Zusammenhang stehenden Lagerveränderungen aufzuhalten, muß vielmehr die Maillard-Reaktion, für welche die Hydroxymethylfurfural-Bildung eine Leitkomponente ist, verlangsamt werden. Durch die Kombination obiger Behandlung und dem Zusatz organischer Schwefelverbindungen in Form von Cystein und/oder Glutathion und/oder cystein-/glutathionreicher Lebensmittel, z.B von Hefe, durch den die Maillard Reaktion verzögert wird, kann dies erreicht werden. Da der alleinige Zusatz von organischen Schwefelverbindungen, wie Versuche der Anmelderin ergeben haben, zum Auftreten eines Schwefelwasserstoff-Fehltones führt, wird erfindungsgemäß die Fehlton-Entfernung nach der Zugabe der organischen Schwefelverbindungen vorgenommen, da auf diese Weise aus dem pflanzlichen Rohstoff stammende, sensorisch Fehltöne verursachende Verbindungen zusammen mit dem Schwefelwasserstoff-Fehlton der Schwefelverbindungen entfernt werden.

Die Behandlung zur Verminderung der sensorisch Fehltöne verursachenden Verbindungen kann unmittelbar in frisch hergestellten Pflanzensäften oder auch in daraus nach bekannten Verfahren hergestellten und bis zur Weiterverarbeitung tiefgekühlten Konzentraten durchgeführt werden. Dieser Variante liegt die Erkenntnis zugrunde, daß bei einer Tiefkühllagerung bzw. bei einer sonstigen Lagerung unter schonenden Bedingungen keine meßbare Bildung von sensorisch Fehltöne verursachenden Verbindungen erfolgt.

Die Adsorption von Aromakomponenten aus Orangensaft an Verpackungsmaterialien am Beispiel des Limonens ist bekannt (Pieper et al, J. Food Sci. 57 (1992) 1408-1411 und dort zitierte frühere Arbeiten). Eine Adsorption von sensorisch Fehltöne verursachenden Verbindungen an Packungsmaterialien, z.B. Polystyrol und Polystyrol-Copolymere, Polyamide, Polyolefine, Low- und/oder High Density Polyethylen, Polypropylen-Copolymer, Polypropylen-Homopolymer, Polyvinylchlorid, Ethylenvinylacetat - auch teilweise hydriert, regenerierte Cellulose, Cellulosenitrat, Celluloseacetat wie sie durch die Anmelderin vorgeschlagen wird, wurde dagegen bisher nicht beschrieben. Hierbei können auch Materialien Verwendung finden wie sie für die adsorptive Entfernung von Fehltönen oben beschrieben wurden.

### Anwendungsbeispiele:

### Beispiel 1:

Bestimmung der Vorstufen für sensorisch Fehltöne verursachende Verbindungen die aus Hydroxyzimtsäuren entstehen können -insbesondere der Ferulasäure und der eigentlichen sensorisch unerwünschten Verbindung p-Vinylguajakol (PVG) und des Hydroxymethylfurfurals (HMF) in Getränken:

Die nachstehenden analytischen Methoden wurden zur Ermittlung der in den folgenden Beispielen aufgeführten Daten eingesetzt.
a.) Bestimmung der freien Hydroxyzimtsäuren -insbesondere der Ferulasäure- in Getränken:
   Prinzip:Die Hydroxyzimtsäuren werden aus der Probe mit Ethylacetat extrahiert u. mittels HPLC (Hochdruckflüssigkeitschromatographie) auf einer C 18 Umkehrphasen Säule in die einzelnen Verbindungen aufgetrennt und quantitativ über Detektion im ultravioletten Bereich im Durchfluß bestimmt.
Probenaufbereitung:
   15 ml des Getränks werden 3 mal mit jeweils 15 ml Ethyl-acetat extrahiert. Die Ethylacetatextrakte werden in einem Spitzkolben vereinigt und unter Vakuum bei 35°C zur Trokkene eingeengt. Der Rückstand wird in 2 ml Ethanol gelöst.
Chromatographische Bedingungen:
Säule: LiChrospher RP18 5um 250 x 4 mm; Vorsäule LiChrospher RP18 5um 10x4 mm.
Eluent: 78 Volumenteile Wasser mit 3 g Ameisensäure/l gemischt mit 22 Volumenteile Methanol.
Durchfluß: 1 ml/min
Druck: 200bar
Temperatur: 28°C
Injektionsvolumen: 15 ul
Detektion: 324 nm
Kalibrierung: über externe Standards der Hydroxyzimtsäuren verschiedener Konzentration.

Vorkommen von Hydroxyzimtsäuren in Säften:
Mit o.g. Methode wurden folgende Mengen an freien Hydroxyzimtsäuren (mg/l) in frischen Säften gefunden:

| Ferulasäure | p-Cumarsäure | Kaffeesäure | | Sinapinsre. |
|---|---|---|---|---|
| Orangensaft | 0,3 | 0,05 | n.n. | 0,2 |
| Grapefruitsaft | 0,25 | n.n. | n.n. | 0,2 |
| Ananassaft | 0,05 | 0,05 | 0,2 | 0,05 |
| Apfelsaft | n.n. | 0,2 | 0,5 | n.n. |
| Traubensaft | 0,05 | 0,1 | 0,25 | n.n. |
| n.n. = < 0,05mg/l | | | | |

Gleichzeitig liegen noch etwa die 10 - 100-fachen Mengen an Hydroxyzimtsäuren esterartig gebunden vor und können, wie in den weiteren Beispielen ersichtlich, bei der Lagerung von Getränken teilweise freigesetzt werden
b.) Bestimmung des p-Vinylguajakols (PVG) u. anderer Vinylphenole in Getränken:
Prinzip:
   PVG wird aus der zentrifugierten Probe durch Festphasenextraktion von Störsubstanzen abgetrennt und über HPLC (Hochdruckflüssigkeitschromatographie) auf einer C 18 Umkehrphasen Säule die einzelnen Verbindungen aufgetrennt und im Durchfluß über die Fluoreszenz und Detektion im ultravioletten Bereich quantitativ bestimmt.
Probenaufbereitung:
   Trübe Proben werden zunächst durch Zentrifugation geklärt. 2 ml der klaren Lösung werden über eine vorkonditionierte C18-Kartusche gegeben und mit 2 ml Wasser nachgewaschen. PVG wird nun mit insgesamt 6 ml Methanol eluiert. Das Eluat wird im Stickstoffstrom auf 2 ml eingeengt.
Chromatographische Bedingungen:
Eluent: A: Wasser mit 15 g/l Essigsäure; B : Methanol mit 15 g/l Essigsäure
Säule: wie unter a.)
Durchfluß: 1 ml/min
Druck: 150 bar
Temperatur: 25°C
Injektionsvolumen: 20 µl
Detektion: Fluoreszenz, Anregung 300 nm, Emission 340 nm für PVG und 280 nm
Gradient: Von 75 % A 15 % B nach 0 % A 100 % B in 20 Minuten
Kalibrierung: über externe Standards von PVG verschiedener Konzentrationen.
   Vorkommen von PVG in Säften: siehe folgende Beispiele.
   Die für andere Vinylphenole ermittelten Gehalte werden als PVG berechnet.
c.) Bestimmung des Hydroxmethylfurfurals (HMF) in Getränken:
Prinzip:
   HMF wird aus der zentrifugierten Probe durch Festphasenextraktion von Störsubstanzen abgetrennt und über HPLC (Hochdruckflüssigkeitschromatographie) auf einer C 18 Umkehrphasen Säule die einzelnen Verbindungen aufgetrennt und im Durchfluß im ultravioletten Bereich quantitativ bestimmt.
Probenaufbereitung:
   Trübe Proben werden zunächst über Zentrifugation geklärt. 2 ml der klaren Lösung werden über eine vorkonditionierte C18-Kartusche gegeben und mit 2 ml Wasser nachgewaschen. HMF wird nun mit insgesamt 6 ml Methanol eluiert. Das Eluat wird im Stickstoffstrom auf 2 ml eingeengt.
Chromatographische Bedingungen:
Eluent: A: Wasser mit 15 g/l Essigsäure; B : Methanol mit 15 g/l Essigsäure
Säule: wie unter a.)
Durchfluß: 0,5 ml/min
Druck: 80 bar
Temperatur: 30 °C
Injektionsvolumen: 20 µl
Detektion: UV 280 nm
Gradient: Isokratisch 75 % A 15 % B
Kalibrierung: über externe Standards von HMF verschiedener Konzentrationen.

Vorkommen von HMF in Säften: siehe folgende Beispiele

### Beispiel 2:

Auswahl eines geeigneten Adsorptionsmaterials zur Entfernung von Verbindungen, die bei der Lagerung sensorische Beeinträchtigungen durch p-Vinylguajakol (PVG) in Orangensaft verursachen.

Zur Herstellung eines trinkfertigen Saftes wurde Orangensaftkonzentrat mit entmineralisiertem Wasser auf 11,5 g Gesamtextrakt/100 g rückverdünnt. Die Feinpulpe wurde durch Zentrifugation abgetrennt. 5 l des erhaltenen klaren Serums wurden mit folgenden Adsorbentien versetzt (Einsatzmengen und Dauer waren in Vorversuchen ermittelt worden):
Versuch 1: ohne Zusatz (Nullprobe)
Versuch 2: 20 g/l Styrol-Divinylbenzol-Harz
Versuch 3: 20 g/l schwach basischer Anionenaustauscher
Versuch 4: 10 g/1 unlösliches Polyamid
Versuch 5: 5 g/l Aktivkohle

Die Adsorbentien wurden jeweils eingerührt und die Probe für eine Stunde stehengelassen. Danach wurde die Flüssigkeit vom Adsorbens getrennt. Die abgetrennte Feinpulpe und Wasserphase wurden wieder im entsprechenden Verhältnis der behandelten Flüssigkeit zugesetzt. Nach der Entnahme von Proben für die sensorische und analytische Bewertung, wurde der verbleibende Rest des Materials in 0,2 l Braunglasflaschen gefüllt und durch Erhitzung auf ca. +80 °C haltbar gemacht. Die Proben wurden zur Beobachtung der Lagerveränderungen bei +4, +20 und +37°C gelagert. Nach bestimmten Zeiträumen wurden Proben zur sensorischen und analytischen Beurteilung entnommen.

### Ergebnisse:

a.) Sensorik:
   Die Beurteilung der Versuche im Rangfolgetest nach ISO 8587 ergab direkt nach Herstellung, 1-, 3-, 6- und 12monatiger Lagerung bei +20 und +37 °C, daß die Versuche 5 und 2 besser als die jeweils unter gleichen Bedingungen und über den gleichen Zeitraum gelagerte Nullprobe bewertet wurden. Die übrigen Versuche wurden hingegen schlechter als die Nullprobe bewertet.
b.) Analytik der Ferulasäure und des p-Vinylguajakol:

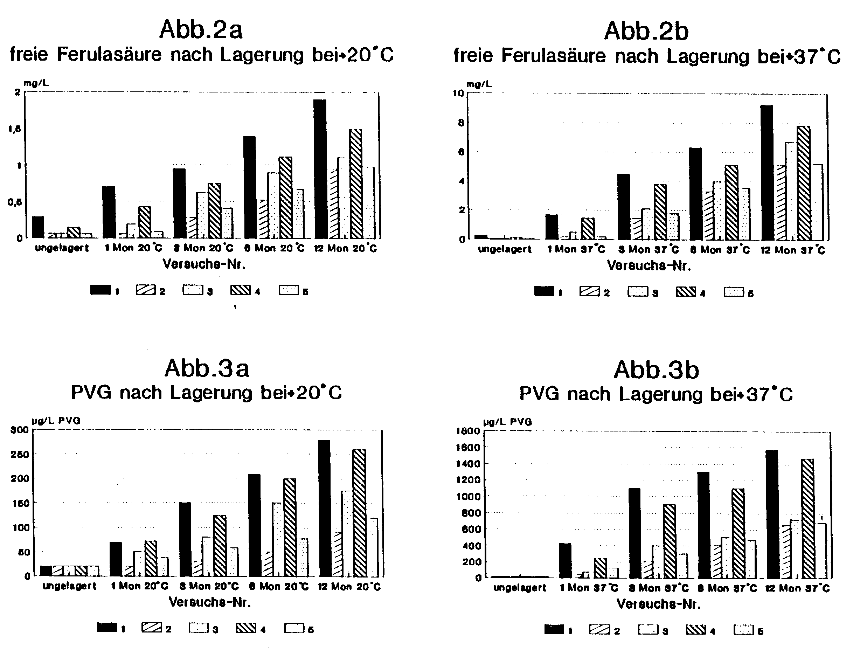

   Die in Abb. 2a, 2b zusammengestellten Ergebnisse zeigen, daß die Gehalte an freier Ferulasäure in den behandelten Proben unmittelbar nach der Herstellung deutlich geringer waren im Vergleich zur Nullprobe. Nach 1-, 3-, 6- und 12monatiger Lagerung bei +20 und +37 °C sind bei allen Versuchen Zunahmen zu erkennen, die aber im Vergleich zur unbehandelten Probe geringer ausfallen. Die geringsten Zunahmen werden bei Versuch 2 und 5 beobachtet. Auch die Bildung von PVG bei der Lagerung ist bei allen behandelten Proben verzögert. Am günstigsten schneiden die Versuche 2 und 5 ab. Während bei allen Ansätzen nach 3 Monaten Lagerung bei 20 °C der Geruchsschwellwert für PVG überschritten wurde, wurde er bei Versuch 2 erst nach 6 Monaten erreicht.
   Die Ergebnisse der Versuchsreihe sind in den beigefügten Abbildungen 2a bis 4b erläutert.
c.) Übrige Inhaltstoffe:
   Gesamtextrakt, Gesamtsäure, pH-Wert, Formolwert und Vitamin C als Leitsubstanzen für die übrigen Inhaltsstoffe wurden bei den Versuchen 1, 2, 4 und 5 nicht verändert. Lediglich bei Versuch 3 hatte der Gesamtsäuregehalt von 7,7 auf 5,2 g/l abgenommen.

### Bewertung der Ergebnisse:

Unter Einbeziehung aller Ergebnisse ist das Styrol-Divinylbenzol Harz für die Entfernung von Verbindungen, die Fehltöne durch PVG Bildung verursachen, am besten geeignet. Zur gezielten Auswahl des Adsorbens war es notwendig, alle Kriterien unter a-c zu berücksichtigen, um Anspruch 1 gerecht zu werden.

### Beispiel 3:

Herstellung eines Orangensaftes mit vermindertem Gehalt an sensorisch Fehltöne verursachenden Verbindungen und hierdurch verbesserter Lagerstabilität durch Adsorbentienbehandlung.

100 l Orangensaft, hergestellt aus Orangensaftkonzentrat durch Rückverdünnung auf 11,5 g Gesamtextrakt/100 g, wurden mittels eines geeigneten Keramikmoduls (Porengröße 0,45 µm) in Serum und Feinpulpe getrennt. Das klare, leicht gelbe Serum wurde mit einem Durchfluß von 10 Bettvolumen/h auf eine mit Styrol-Divinylbenzol- Harz gefüllte Kolonne (Länge 50 cm; Durchmesser 5 cm) gegeben. Das Eluat wurde gesammelt und wieder mit den entsprechenden Mengen an Feinpulpe und Wasserphase versetzt. Das erhaltene Getränk wurde anschließend auf 0,7 l Glasflaschen gefüllt und durch Pasteurisation haltbar gemacht. Die unter 1 aufgeführten analytischen Untersuchungen wurden nach der Pasteurisation und nach entsprechender Lagerung durchgeführt, wobei Vergleichsproben von unbehandeltem Orangensaft miteinbezogen wurden.

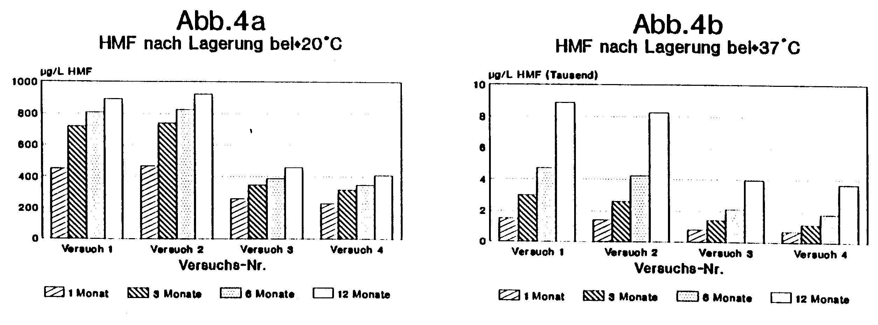

Die Ergebnisse sind in Abb. 4a, 4b dargestellt. In diesen Proben wurde zusätzlich HMF bestimmt. Die Behandlung führte zu einer etwa 40 %igen Reduzierung des HMF im frischen Produkt. Nach Lagerung waren die HMF-Werte nicht mehr unterschiedlich. Da durch die Behandlung nur das HMF selbst nicht jedoch auch seine Vorstufe, d.h. die fruchteigenen Zucker, entfernt wurden, ist der HMF-Gehalt nur unmittelbar nach der Pasteurisation nicht jedoch im gelagerten Produkt im Vergleich zur Nullprobe niedriger. Bei der Lagerung wird HMF aus den fruchteigenen Zuckern nachgebildet, weshalb hier keine Unterschiede mehr auftreten. Eine Beeinflussung der HMF-Bildung ist durch eine Kombination mit den Maßnahmen unter Beispiel 4 möglich.

Bei der sensorischen Gegenüberstellung von behandelter und unbehandelter Probe, die jeweils über den gleichen Zeitraum bei +20 und +37 °C gelagert wurden, ergab sich eine eindeutige Bevorzugung der behandelten Proben. Die sensorische Prüfung wurde jeweils von 20 geschulten Verkostern durchgeführt. Die bei +20°C gelagerten behandelten Proben entsprachen nach einer Lagerzeit von ca. 10 Monaten in ihrem Geschmacksprofil weitgehend dem eines frisch hergestellten Orangensaftes, während die unbehandelten Proben einen deutlichen Lagerton aufwiesen. Bei den bei +37°C gelagerten behandelten Proben war ein Lagerton nach etwa 4 Monaten festzustellen, während bei den unbehandelten Proben bereits nach 4-wöchiger Lagerung bei +37°C ein deutlicher Lagerton festgestellt wurde.

Das Getränk hatte nach 12 monatiger Lagerung bei +20°C folgende Kennzahlen:

| | |
|---|---|
| Fruchtgehalt | 100 Gew.-% |
| pH-Wert | 3,6 |
| Gesamtextrakt | 11,5 g/100 g |
| Gesamtsäure berechnet als Zitronensäure | 0,80 g/100 g |
| Verhältnis Gesamtextrakt : Gesamtsäure | 14,4 |
| freie Hydroxyzimtsäuren | 0,95 mg/l |
| einfache Vinylphenole berechnet als PVG | 95 ug/l |
| HMF | 910 ug/l |

Eine Überprüfung der Gehalte einiger typischer Inhaltsstoffe für Orangensaft wie Glucose, Fructose, Saccharose, Vitamin C, Zitronensäure, Äpfelsäure, Kalium, Calcium und Magnesium ergab, daß diese gegenüber dem unbehandelten Ausgangsmaterial nicht verändert waren. Sie entsprachen denjenigen eines Orangensaftes.

### Beispiel 4:

Kombinierter Einsatz reduzierender organischer Schwefelverbindungen und Adsorbentien zur Verbesserung der Lagerstabilität von Orangensaft Vor der Behandlung mit Adsorbentien wurde der gemäß Beispiel 3 aus Konzentrat hergestellte Orangensaft in folgende Ansätze aufgeteilt:
Versuch 1: Nullprobe unbehandelt
Versuch 2: Nullprobe behandelt (ohne Zusatz)
Versuch 3: Zusatz von 1 mmol/l Cystein
Versuch 4: Zusatz von 1 mmol/l Glutathion

Danach wurde entsprechend Beispiel 3 mit Adsorbentien behandelt. Die HMF-Werte der Proben nach Lagerung (Abb. 2) zeigen, daß durch die Kombination von Behandlung und Zusätzen nun nicht nur, wie bei Beispiel 3 die PVG-, sondern auch die HMF-Bildung bei der Lagerung verzögert wird. Die Kennzahlen des Produktes entsprachen denjenigen des Beispiels 3, wobei abweichend die HMF Werte nach 12 monatiger Lagerung bei +20°C 360 (Versuch 3) und 405 ug/l (Versuch 4) betrugen.

Im Rangfolgetest nach ISO 8587 ergaben sich für die jeweils bei gleicher Temperatur (+20 bzw. +37 °C) und über den gleichen Zeitraum gelagerten Proben jeweils die besten Bewertungen für Versuche 3 und 4.

Dies zeigt in Übereinstimmung mit der Analytik, daß durch die Kombination beider Maßnahmen die nachhaltigsten Verbesserungen der Lagerstabilität erzielbar sind.

Anstelle von Cystein oder Glutathion können auch N-Acethylcystein oder cystein- od. glutathionreiche Lebensmittel oder Kombinationen dieser Zusätze eingesetzt werden.

### Beispiel 5:

Herstellung eines Grapefruitsaftes mit sensorisch verbesserter Lagerstabilität unter Verwendung von zellfreien Extrakten aus Mikroorganismen.

Hierzu geeignete Mikroorganismen z. B. Pyknoporus cinnabarinus, Pseudomonas acidovorans oder Bacillus subtilis wurden auf Ferulasäure enthaltenden Nährmedien kultiviert. Etwa 1 g des nach Abernten und Zerstören der Zellen über Ultraschall gewonnenen Extraktes wurde zu 100 ml Grapefruitsaft gegeben. Nach 2 Stunden wurden die Enzyme hitzeinaktiviert. Nach dieser Behandlung, die direkt am trüben Saft erfolgt ist, kann weder freie Ferulasäure, noch gebundene Ferulasäure, noch PVG nachgewiesen werden. Auf diese Weise war es möglich die o. g. Fehltöne verursachenden Verbindungen vollständig aus Grapefruitsaft zu entfernen, ohne die typische leichte Bitterkeit zu vermindern.

Im Vergleich zu den unbehandelten Proben war die Lagerstabilität der behandelten Proben deutlich verbessert. Während die bei 20° C gelagerten behandelten Proben nach 12 Monaten Lagerung gegenüber einem frisch hergestellten Produkt nur gering verändert waren, zeigten die unbehandelten Proben nach 12-monatiger Lagerung den typischen Alterungston.

### Beispiel 6

Herstellung eines Grapefruitsaftes gemäß Beispiel 5 bei gleichzeitigem Zusatz von reduzierenden organischen schwefelhaltigen Verbindung, wie sie in Beispiel 4 beschrieben wurden. Durch die Kombination der vorgenannten Maßnahmen wurde ein Produkt erhalten, das nach 12-monatiger Lagerung bei +20°C folgende Kennzahlen aufwies:

| | |
|---|---|
| Fruchtgehalt | 100 Gew.-% |
| pH-Wert | 3,4 |
| Gesamtextrakt | 10,2 g/100 g |
| Gesamtsäure berechnet als Zitronensäure | 1,24 g/100 g |
| Verhältnis Gesamtextrakt : Gesamtsäure | 8,2 |
| freie Hydroxyzimtsäuren | 0,2 mg/l* |
| einfache Vinylphenole berechnet als PVG | 20 ug/l* |
| HMF | 150 ug/l |

| | |
|---|---|
| * Nachweisgrenzen | |

Die behandelten Proben wurden bei +20°C gelagert und in regelmäßigen Abständen über einen Zeitraum von 12 Monaten im Vergleich zu unbehandelten Proben verkostet. Dabei zeigte sich, daß die unbehandelten Proben nach 12 Monaten Lagerung eine noch geringere Veränderung aufwiesen, als sie in den gemäß Beispiel 5 hergestellten Proben festgestellt wurde. Auch hier konnte durch den Zusatz organischer Schwefelverbindungen eine noch stärkere Verbesserung der Lagerstabilität erreicht werden.

### Beispiel 7:

Herstellung eines trüben Apfelsaftes mit sensorisch verbesserter Lagerstabilität.

1000 l naturtrüber Apfelsaft wurden durch Zentrifugation von den Trubstoffen befreit. Der Saft wurde dann unter Rühren mit 5 g unlöslichem Polyamid versetzt. Die Suspension wurde weitere 30 Minuten lang gerührt. Danach wurde das unlösliche Polyamid durch ein Schichtenfilter abgetrennnt. Trub und Saft wurden anschließend wieder vereinigt.

Der so erhaltene Saft hatte nur noch 30 % des ursprünglichen Gehaltes an Hydroxyzimtsäuren. Die sensorische Lagerstabilität des behandelten Saftes war gegenüber der nicht behandelten Vergleichsprobe deutlich verbessert.

Das behandelte Produkt wies nach 12 monatiger Lagerung bei +20°C folgende Werte auf:

| | |
|---|---|
| Fruchtgehalt | 100 Gew.% |
| pH-Wert | 3,7 |
| Gesamtextrakt | 11,8 g/100 g |
| Gesamtsäure, berechnet als Zitronensäure | 0,65 g/100 g |
| Verhältnis Gesamtextrakt : Gesamtsäure | 18,1 |
| freie Hydroxyzimtsäuren | 0,4 mg/l |
| einfache Vinylphenole berechnet als PVG | 45 ug/l |
| HMF | 800 ug/l |

Durch gleichzeitigen Einsatz reduzierender organischer Schwefelverbindungen wurde ein Getränk hergestellt, das nach 12- monatiger Lagerung bei +20°C einen Gehalt von nur 180 ug HMF/l aufwies.

### Beispiel 8:

Säfte mit sensorisch verbesserter Lagerstabilität erzielt durch geeignete Verpackungsmaterialien.

In Vorversuchen wurden unterschiedliche Kunststoffmaterialien, in mit Saft gefüllte Glasflaschen eingebracht und nach Haltbarmachung für ein Jahr bei Raumtemperatur gelagert. Die PVG und HMF Werte wurden beobachtet.

Mehrere Materialien adsorbierten PVG und HMF wodurch sich Säfte ergaben, die nach einem Jahr kein nachweisbares PVG u. HMF aufwiesen.

In weiteren Versuchen wurde ein aus Orangensaftkonzentrag durch Zugabe von entmineralisiertem Wasser auf Trinkstärke rückverdünnter Orangensaft kaltsteril in Verbundpackungen abgefüllt, die mit einer Innenbeschichtung aus Polystyrol, Polystyrol-Copolymeren, Polyamid, Polypropylen-Copolymeren, Cellulose bzw. Cellulosederivaten ausgestattet waren. Zum Vergleich wurde der Orangensaft kaltsteril in braune Glasflaschen abgefüllt. Die Proben wurden bei +20° C über einen Zeitraum von 12 Monaten gelagert und in regelmäßigen Abständen verkostet. Die in den Verbundpackungen gelagerten Getränke wiesen verringerte Gehalte an Fehltöne verursachenden Verbindungen und eine deutlich verbesserte Lagerstabilität auf.

### Beispiel 9

Herstellung eines Orangennektars mit sensorisch verbesserter Lagerstabilität durch Einsatz eines gereinigten zellfreien Extraktes aus Mikroorganismen.
a.) Herstellung u. Reinigung des zellfreien Extraktes.
   Nach Herstellung eines zellfreien Extraktes von Pyknoporus cinnabarinus gemäß Beispiel 5 wurde dieser über Gelfiltration in verschiedene Proteinfraktionen unterschiedlicher Molekulargewichtsbereiche aufgetrennt. Die einzelnen Fraktionen wurden in Orangensaftserum auf Ferulasäureabbau untersucht. Zwei der ingesamt 6 Fraktionen, die Ferulasäure abbauten, wurden als gereinigter zellfreier Extrakt vereinigt.
b.)Herstellung eines Orangennektars aus Orangensaftkonzen trat und Entfernung der Ferulasäure.
   Aus Orangensaftkonzentrat, Invertzuckersirup und entmineralisiertem Wasser wurde ein Orangennektar mit einem Fruchtsaftgehalt von 60 Gew.-% hergestellt. Das Getränk wurde mit 1 ml/l des Extraktes gemäß a.) versetzt und für 5 Stunden bei Raumtemperatur belassen. Nach dieser Behandlung war weder freie noch gebundene Ferulasäure nach-weisbar. Das Getränk wurde mit den entsprechenden Mengen Orangen-Wasserphase versetzt, in Glasflaschen abgefüllt und in üblicher Weise durch Hitze haltbar gemacht.
   Nach 12-monatiger Lagerung bei Raumtemperatur war im Gegensatz zur unbehandelten Vergleichsprobe PVG nicht nachweisbar; die sensorischen Eigenschaften waren gegenüber der Vergleichsprobe deutlich verbessert und das Produkt entsprach in seinem Geschmacksprofil einer nicht gelagerten, unbehandelten Probe.

## Patentansprüche

1. Verfahren zur Herstellung eines nichtalkoholischen Getränkes
- mit einem Gehalt an Pflanzensaft zwischen 20 und 100 Gew.%, vorzugsweise zwischen 40 und 100 Gew.%,
- einem pH-Wert zwischen 2,8 und 5,2,
- einem Gesamtextrakt zwischen 2 und 16g/100g, vorzugsweise zwischen 4 und 16g/100g, und
- einem Verhältnis aus Gesamtextrakt, ausgedrückt in g/100g, zu Gesamtsäure, berechnet als g/100g Zitronensäure, von 5 bis 50, wobei
- das Getränk nach einer Lagerung von zwölf Monaten bei 20°C einen Gehalt von 1,2 mg/l an freien Hydroxyzimtsäuren und 0,2 mg/l an einfachen Vinylphenolen, berechnet als p-Vinylguajakol, nicht überschreitet,
- sowie vermindertem Gehalt an sensorisch Fehltöne verursachenden Verbindungen und hierdurch verbesserter Lagerstabilität bei weitgehendem Erhalt der übrigen Eigenschaften und Inhaltsstoffe des Getränks,
dadurch gekennzeichnet,
daß einfache phenolische Verbindungen als sensorisch bei der Lagerung Fehltöne verursachende Verbindungen während oder nach der Herstellung dadurch selektiv entfernt oder umgewandelt werden, daß im Getränk gelöste Hydroxyzimtsäuren als Vorstufen dieser Verbindungen durch geeignete Trennverfahren selektiv entfernt werden, und/oder daß sie durch Enzyme und/oder Mikroorganismen und/oder Zusätze selektiv umgewandelt werden.

2. Verfahren nach Anspruch 1, dadurch gekennzeichnet, daß vor dem Entfernen oder Umwandeln der Vorstufen reduzierende organische Schwefelverbindungen zugesetzt werden.

3. Verfahren nach Anspruch 1 oder 2, dadurch gekennzeichnet, daß die selektive Entfernung oder Umwandlung der sensorisch bei der Lagerung Fehltöne verursachenden Verbindungen durch ein Verpackungsmaterial zur Lagerung eines nichtalkoholischen Getränkes und/oder Zusätze, welche dem Getränk vor der Abfüllung und Lagerung zugesetzt werden, erfolgt.

4. Nichtalkoholisches Getränk wie in dem Oberbegriff von Anspruch 1 definiert,
dadurch gekennzeichnet,
daß es durch ein Verfahren nach einem der Ansprüche 1 - 3 erhältlich ist.

5. Nichtalkoholisches Getränk nach Anspruch 4, dadurch gekennzeichnet, daß es aus Fruchtsaft und/oder Fruchtmark, Fruchtsaft und/oder Fruchtmarkkonzentrat, Gemüsesaft und/oder Gemüsemark- und oder Gemüsesaftkonzentrat einzeln oder in Kombination hergestellt wurde.

6. Nichtalkoholisches Getränk nach Anspruch 4 oder 5 in konzentrierter Form, dadurch gekennzeichnet, daß der Gesamtextraktgehalt 40-88g/100g beträgt.

7. Nichtalkoholisches Getränk nach einem der Ansprüche 4 bis 6, dadurch gekennzeichnet, daß Citrussäfte wie Drangen- und Grapefruitsaft, und/oder konzentrierter Drangen- und Grapefruitsaft als Ausgangsmaterial verwendet werden.

8. Nichtalkoholisches Getränk nach einem der Ansprüche 4 bis 7, dadurch gekennzeichnet, daß Kern-, Stein- und/oder Beerenobstsäfte und/oder Konzentrate verwendet werden.

9. Nichtalkoholisches Getränk nach einem der Ansprüche 4 bis 8, dadurch gekennzeichnet, daß nach Lagerung über einen Zeitraum von 12 Monaten bei 20°C im trinkfertigen Produkt der Gehalt an freien Hydroxyzimtsäuren 0,6 mg/l und der Gehalt an einfachen Vinylphenolen, berechnet als p-Vinylguajakol, 0,05 mg/l nicht überschreitet.

10. Nichtalkoholisches Getränk, vorzugsweise aus Zitrusfrüchten hergestellt, nach einem der Ansprüche 4 bis 9, dadurch gekennzeichnet, daß nach einer Lagerung über einen Zeitraum von 12 Monaten bei 20°C im trinkfertigen Produkt der Gehalt an 5-Hydroxy-2-Methylfurfural 0,5 mg/l nicht überschreitet.

## Claims

1. Method of manufacturing a non-alcohol drink
- with a plant juice content between 20 and 100% by weight, preferably between 40 and 100% by weight,
- with a pH value between 2.8 and 5.2,
- with a total extract between 2 and 16 g/100 g, preferably between 4 and 16 g/100 g, and
- with a ratio of total extract, expressed in g/100 g, to total acid, calculated as g/100 g citric acid, from 5 to 50, where
- the drink does not exceed a content of 1.2 mg/l in free hydroxycinnamic acids and 0.2 mg/l of simple vinyl phenols, calculated as p-vinyl guaiacol after storage for twelve months at 20 °C,
- and with reduced sensory off-flavour components and, by this means, improved storage stability with substantial retention of the other properties and content materials of the drink
characterised in that
simple phenolic compounds, acting as compounds causing sensory off-flavour components during storage, are removed or converted selectively during or alter manufacture by selectively removing, by appropriate separating methods, hydroxycinnamic acids (as the precursors of these compounds) dissolved in the drink and/or selectively converting them by enzymes and/or micro-organisms and/or additives.

2. Method according to Claim 1, characterised in that organic sulphur compounds, acting as reducing agents, are added before the removal or conversion of the precursors.

3. Method according to Claim 1 or 2, characterised in that the selective removal or conversion of the compounds causing the sensory off-flavour components during storage takes place by means of a packing material for storing a non-alcoholic drink and/or by additives which are added to the drink before filling and storage.

4. Non-alcoholic drink as defined in the preamble to Claim 1,
characterised in that
it can be obtained by means of a method according to one of Claims 1 to 3.

5. Non-alcoholic drink according to Claim 4, characterised in that it is manufactured from fruit juice and/or fruit pulp, fruit juice concentrate and/or fruit pulp concentrate, vegetable juice and/or vegetable pulp and/or vegetable juice concentrate individually or in combination.

6. Non-alcoholic drink according to Claim 4 or 5 in concentrated form, characterised in that the total extract content is 40-88 g/100 g.

7. Non-alcoholic drink according to one of Claims 4 to 6, characterised in that citrus juices such as orange juice and grapefruit juice and/or concentrated orange juice and grapefruit juice are used as the initial material.

8. Non-alcoholic drink according to one of Claims 4 to 7, characterised in that pomaceous fruit juices, drupaceous fruit juices and/or soft-fruit juices and/or concentrates are used.

9. Non-alcoholic drink according to one of Claims 4 to 8, characterised in that in the product ready for drinking, the content of free hydroxycinnamic acid does not exceed 0.6 mg/l and the content of simple vinyl phenols, calculated as p-vinyl guaiacol, does not exceed 0.05 mg/l after storage for a period of twelve months at 20 °C.

10. Non-alcoholic drink, preferably manufactured from citrus fruits, in accordance with Claims 4 to 9, characterised in that in the product ready for drinking, the content of 5-hydroxy-2-methyl furfural does not exceed 0.5 mg/l after storage for a period of twelve months at 20 °C.

## Revendications

1. Procédé de fabrication d'une boisson non alcoolisée
- ayant une teneur en suc de plante comprise entre 20 et 100% en poids, de préférence entre 40 et 100% en poids,
- un pH compris entre 2,8 et 5,2,
- un extrait total compris entre 2 et 16 g/100 g, de préférence entre 4 et 16 g/100 g, et
- un rapport de l'extrait total, exprimé en g/100 g, à l'acide total, calculé en g/100 g d'acide citrique, de 5 à 50, où
- la boisson ne dépasse pas, au bout de douze mois de stockage à 20°C, une teneur de 1,2 mg/l en acides hydroxycinnamiques libres et 0,2 mg/l de monophénols vinyliques, calculée sous la forme p-vinylguaïacol,
- ainsi qu'une teneur réduite en composés provoquant des troubles sensoriels et ainsi une meilleure stabilité au stockage avec maintien dans une large mesure des autres propriétés et des autres constituants de la boisson,
caractérisé en ce que
les composés monophénoliques, en tant que composés provoquant des troubles sensoriels au stockage, sont sélectivement éliminés ou transformés pendant ou après leur préparation par élimination sélective des acides hydroxycinnamiques dissous dans la boisson sous forme de précurseurs de ces composés, par des procédés de séparation appropriés, et/ou par transformation sélective au moyen d'enzymes et/ou de micro-organismes et/ou d'additifs.

2. Procédé selon la revendication 1, caractérisé en ce qu'on ajoute des composés organiques soufrés réducteurs avant l'élimination ou la transformation des précurseurs

3. Procédé selon la revendication 1 ou 2, caractérisé en ce qu'on procède à l'élimination ou à la transformation sélective des composés provoquant des troubles sensoriels au stockage grâce à un matériau de conditionnement pour le stockage d'une boisson non alcoolisée et/ou d'additifs que l'on ajoute à la boisson avant le remplissage et le stockage.

4. Boisson non alcoolisée telle que définie dans le préambule de la revendication 1,
caractérisée en ce qu'on peut l'obtenir par un procédé selon l'une des revendications 1 à 3.

5. Boisson non alcoolisée selon la revendication 4, caractérisée en ce qu'on la fabrique à partir de jus de fruits et/ou de pulpe de fruits, de concentré de jus de fruits et/ou de pulpe de fruits, de jus de légumes et/ou de pulpe de légumes et/ou de concentré de jus de légumes et/ou de pulpe de légumes, isolément ou en combinaison.

6. Boisson non alcoolisée selon la revendication 4 ou 5 sous forme concentrée, caractérisée en ce que la teneur en extrait total s'élève à 40-88 g/100 g.

7. Boisson non alcoolisée selon l'une des revendications 4 à 6, caractérisée en ce qu'on utilise comme produits de départ des jus d'agrumes comme les jus d'orange et de pamplemousse, et/ou des jus d'orange et de pamplemousse concentrés.

8. Boisson non alcoolisée selon l'une des revendications 4 à 7, caractérisée en ce qu'on utilise des jus et/ou des concentrés de fruits à pépins, de fruits à noyau et/ou de baies.

9. Boisson non alcoolisée selon l'une des revendications 4 à 8, caractérisée en ce qu'après stockage pendant un intervalle de temps de 12 mois à 20°C la teneur en acides hydroxycinnamiques libres ne dépasse pas 0,6 mg/l et la teneur en monophénols vinyliques, calculée sous la forme p-vinylguaïacol, ne dépasse pas 0,05 mg/l dans le produit prêt à boire.

10. Boisson non alcoolisée, fabriquée de préférence à partir d'agrumes, selon l'une des revendications 4 à 9, caractérisée en ce qu'après stockage pendant un intervalle de 12 mois à 20°C la teneur en 5-hydroxy-2-méthylfurfural ne dépasse pas 0,5 mg/l dans le produit prêt à boire.
